# EUROPEAN PATENT APPLICATION

(11) **EP 4 693 559 A1**
(43) Date of publication of application: **11.02.2026**
(21) Application number: 24884256.9
(22) Date of filing: 09.09.2024
(51) Int. Cl.: H01M 10/0562, C04B 35/447

(54) **MODIFIED LITHIUM ALUMINUM TITANIUM PHOSPHATE, PREPARATION METHOD THEREFOR, AND LITHIUM-ION SOLID-STATE BATTERY**

(30) Priority: 02.11.2023 CN 202311447909
(71) Applicant: Hefei Gotion High-Tech Power Energy Co., Ltd., Hefei, Anhui 230012 (CN)
(72) Inventor: LIU, Xingliang, Hefei, Anhui 230012 (CN); YANG, Maoping, Hefei, Anhui 230012 (CN); WANG, Weiwei, Hefei, Anhui 230012 (CN); FANG, Xuan, Hefei, Anhui 230012 (CN); ZHANG, Luyao, Hefei, Anhui 230012 (CN); XU, Dandan, Hefei, Anhui 230012 (CN)
(74) Representative: Novagraaf Technologies
(86) International application number: PCT/CN2024/117806
(87) International publication number: WO 2025/092249

(57) **Abstract**

Provided are modified Lithium Aluminum Titanium Phosphate and preparation method thereof, and lithium-ion solid-state battery. The modified Lithium Aluminum Titanium Phosphate includes a Lithium Aluminum Titanium Phosphate matrix and a coating layer. The Lithium Aluminum Titanium Phosphate matrix is represented by Li_{1.3}Al_{0.3}Ti_{1.7}(PO₄)₃, and the coating layer is formed by ZrₓSi₁₋ₓO₂/TiO₂, where x is 0.1-0.9, and a particle size of the ZrₓSi₁₋ₓO₂/TiO₂ is less than a particle size of the Li_{1.3}Al_{0.3}Ti_{1.7}(PO₄)₃. A modified LATP material having the above compositions simultaneously has the advantages of being high in ionic conductivity and capacity retention rate, good in thermal stability, etc.

## Description

This application is based upon and claims priority to Chinese Patent Application No. 202311447909.7 filed on November 02, 2023, the disclosure of which is hereby incorporated by reference in its entirety.

### Technical Field

The present disclosure relates to the field of solid-state electrolytes, and specifically, to modified Lithium Aluminum Titanium Phosphate and preparation method thereof, and lithium-ion solid-state battery.

### Background

The traditional lithium-ion batteries have the problems of poor cycling performance and potential safety hazards. The development of all-solid-state lithium-ion batteries may solve these problems. Compared with the traditional commercial lithium-ion batteries, the all-solid-state batteries have the following advantages: cycling performance and safety are good, material stability is good, an operating range is broader, power and energy densities are larger, a lithium-ion conductor is not prone to chemical hardening, an operation is simple and convenient, etc. The all-solid-state batteries are expected to be widely applied to large-scale power storage systems, such as electric vehicles and electronic devices, due to their high energy density and good safety performance.

One of the cores in the all-solid-state lithium-ion batteries lies in a solid-state electrolyte material. Due to high ionic conductivity, an NASICON-type material LM₂(PO₄)₃ (L = Li, Na, K; M = Ge, Ti, Sn, Hf, Zr) in the solid-state electrolyte material is extensively studied, and Lithium Aluminum Titanium Phosphate (Li₁₊ₓAlₓTi₂₋ₓ(PO₄)₃, LATP) has obtained increasing attention. Currently, the most widely used methods for preparing an LATP solid-state electrolyte are a sol-gel method, a molten salt quenching method, a water cooling method, and a high-temperature solid-state method. Existing literature reports the use of Al₂O₃ as an aluminum source in a solid-phase method. In sol-gel or hydrothermal methods involving solution-related processes, aluminum nitrate is commonly used as the aluminum source. The ionic conductivity of a ceramic body sintered from LATP powder prepared by the sol-gel method may reach 10⁻⁴ S/cm. For the nano LATP obtained by a high-energy ball milling solid-phase method, the ionic conductivity after heat treatment is also 10⁻⁴ S/cm.

Existing LATP materials rely on the migration of conductive particles, and the degree of tightness of crystal arrangement in the lithium-ion conductor significantly affects the migration rate of ions within the conductor. The existing LATP materials mainly have the problem of low ionic conductivity, and the actual capacity loss caused by Ti⁴⁺ and Ti³⁺ affects the performance of LATP materials. Therefore, there is a need for an LATP material with high ionic conductivity and capacity retention rate.

### Summary

The present disclosure is mainly intended to provide modified Lithium Aluminum Titanium Phosphate and preparation method thereof, and lithium-ion solid-state battery, so as to solve the problems in an existing LATP material of low ionic conductivity and a low capacity retention rate.

In order to implement the above objective, an aspect of the present disclosure provides modified Lithium Aluminum Titanium Phosphate, including a Lithium Aluminum Titanium Phosphate matrix and a coating layer. The Lithium Aluminum Titanium Phosphate matrix is represented by Li_{1.3}Al_{0.3}Ti_{1.7}(PO₄)₃, and the coating layer is formed by ZrₓSi₁₋ₓO₂/TiO₂, where x is 0.1-0.9, and a particle size of the ZrₓS₁₋ₓO₂/TiO₂ is less than a particle size of the Li_{1.3}Al_{0.3}Ti_{1.7}(PO₄)₃.

Further, a particle size D50 of the modified Lithium Aluminum Titanium Phosphate is 0.9-1.5 µm, and Dmax is less than 10 µm.

Further, a ratio of the amounts of substances in the Lithium Aluminum Titanium Phosphate matrix and the coating layer is 1:(0.001-0.02).

Second aspect of the present disclosure further provides a method for preparing the above modified Lithium Aluminum Titanium Phosphate. The preparation method includes: a Lithium Aluminum Titanium Phosphate matrix is prepared; and physical coating is performed on the Lithium Aluminum Titanium Phosphate matrix and ZrₓSi₁₋ₓO₂/TiO₂, so as to obtain the modified Lithium Aluminum Titanium Phosphate.

Further, preparing the Lithium Aluminum Titanium Phosphate matrix includes: dry mixing, sintering, and first grinding are sequentially performed on a mixture of a lithium source compound, an aluminum source compound, a titanium source compound, and a phosphorus source compound, so as to obtain the Lithium Aluminum Titanium Phosphate matrix. Preferably, a molar ratio of Li in the lithium source compound, Al in the aluminum source compound, Ti in the titanium source compound, and P in the phosphorus source compound is (1.3-1.35):0.3:1.7:3.

Further, the dry mixing process includes: the mixture of the lithium source compound, the aluminum source compound, the titanium source compound, and the phosphorus source compound is mixed for 3-5 min at a rotary speed of 200-400 rpm, and then is mixed for 3-5 min at the rotary speed of 700-900 rpm.

Further, the sintering process is performed under an air atmosphere, a sintering temperature is 800-950 °C, and a constant temperature time is 6-15 h.

Further, the first grinding includes: deionized water is used as a solvent to perform ultrafine grinding on a sintered product until the particle size D50 is 0.5-0.6 µm.

Further, the physical coating includes: second grinding, spray drying, and crushing are sequentially performed on a mixture of the Lithium Aluminum Titanium Phosphate matrix and the ZrₓSi₁₋ₓO₂/TiO₂, so as to obtain the modified Lithium Aluminum Titanium Phosphate. Preferably, after the second grinding, a particle size D50 of the mixture is 0.2-0.3 µm; preferably, conditions for the spray drying comprise an inlet air temperature being 220-250 °C and an outlet air temperature being 90-110 °C; and preferably, the crushing is airflow pulverization, after crushing, a particle size D50 of particles is 0.9-1.5 µm, and Dmax is less than 10 µm.

A third aspect of the present disclosure further provides a lithium-ion solid-state battery, including a solid-state electrolyte. The solid-state electrolyte is the above modified Lithium Aluminum Titanium Phosphate or is prepared by the above preparation method.

By using the technical solutions of the present disclosure, the coating layer formed on a surface of the LATP material by the ZrₓSi₁₋ₓO₂/TiO₂ can effectively increase the ionic conductivity of the LATP material, and a differential scanning calorimetry peak temperature can be effectively increased by applying the coating layer in a ternary cathode material, thereby improving the capacity and thermal stability of a ternary material. By causing the particle size of the ZrₓSi₁₋ₓO₂/TiO₂ to be less than the particle size of the Li_{1.3}Al_{0.3}Ti_{1.7}(PO₄)₃, the ZrₓSi₁₋ₓO₂/TiO₂ can be better coated on the surface of the LATP material, thereby reducing holes and gaps in the surface of the LATP material, and improving the ionic conductivity. Based on this, a modified LATP material having the above compositions simultaneously has the advantages of being high in ionic conductivity and capacity retention rate, good in thermal stability, etc.

### Brief Description of the Drawings

The drawings described herein are used to provide a further understanding of the present disclosure, and constitute a part of the present disclosure. The exemplary embodiments and descriptions of the present disclosure are used to explain the present disclosure and do not constitute an improper limitation of the present disclosure. In the drawings:
Fig. 1 is an X-Ray Diffraction (XRD) diagram of a modified LATP material prepared in Embodiment 3 and a modified LATP material prepared in Comparative embodiment 1 according to the present disclosure.
Fig. 2 is a Scanning Electron Microscope (SEM) diagram of a modified LATP material prepared in Embodiment 3 according to the present disclosure.
Fig. 3 is an SEM diagram of an LATP material prepared in Comparative embodiment 4 according to the present disclosure.

### Detailed Description of the Embodiments

It is to be noted that the embodiments in the present disclosure and the features in the embodiments may be combined with one another without conflict. The present disclosure will be described below in detail with reference to the embodiments.

As described in Background, an existing LATP material has the problem of low ionic conductivity and a low capacity retention rate. In order to solve the above technical problem, the present disclosure provides modified Lithium Aluminum Titanium Phosphate. The modified Lithium Aluminum Titanium Phosphate includes a Lithium Aluminum Titanium Phosphate matrix and a coating layer. The Lithium Aluminum Titanium Phosphate matrix is represented by Li_{1.3}Al_{0.3}Ti_{1.7}(PO₄)₃, and the coating layer is formed by ZrₓSi₁₋ₓO₂/TiO₂, where x is 0.1-0.9, and a particle size of the ZrₓS₁₋ₓO₂/TiO₂ is less than a particle size of the Li_{1.3}Al_{0.3}Ti_{1.7}(PO₄)₃.

The coating layer formed on a surface of the LATP material by the ZrₓSi₁₋ₓO₂/TiO₂ can effectively increase the ionic conductivity of the LATP material, and a differential scanning calorimetry peak temperature may be effectively increased by applying the coating layer in a ternary cathode material, thereby improving the capacity and thermal stability of a ternary material. By causing the particle size of the ZrₓSi₁₋ₓO₂/TiO₂ to be less than the particle size of the Li_{1.3}Al_{0.3}Ti_{1.7}(PO₄)₃, the ZrₓSi₁₋ₓO₂/TiO₂ can be better coated on the surface of the LATP material, thereby reducing holes and gaps in the surface of the modified Lithium Aluminum Titanium Phosphate material, and improving the ionic conductivity. Based on this, a modified LATP material having the above compositions simultaneously has the advantages of being high in ionic conductivity and capacity retention rate, good in thermal stability, etc.

It is to be noted that, in the ZrₓSi₁₋ₓO₂/TiO₂ used in the present disclosure, x may be selected from 0.1, 0.2, 0.3, 0.4, 0.5, 0.6, 0.7, 0.8, 0.9 or any range formed by any two of the above values. It may be purchased as a commercial product or made at home. A preferred preparation manner includes: first, a TiO₂ nanotube is subjected to the coating of oleic acid, the hydrolysis of hexaalkyl trimethyl ammonium bromide, tetraethyl orthosilicate, and zirconyl chloride octahydrate, the calcination of an oleic acid layer, and silanization and phosphorylation modification, so as to prepare a phosphate-promoted ZrₓS₁₋ₓO₂/TiO₂ composite material.

The overall performance of the modified Lithium Aluminum Titanium Phosphate may be further improved by optimizing the particle sizes of the Lithium Aluminum Titanium Phosphate matrix and the ZrₓSi₁₋ₓO₂/TiO₂. In a preferred embodiment, a particle size D50 of the modified Lithium Aluminum Titanium Phosphate is 0.9-1.5 µm, and Dmax is less than 10 µm. Meanwhile, compared to other particle size ranges, by limiting the particle size of the modified Lithium Aluminum Titanium Phosphate within the above range, holes and gaps in the surface of the modified Lithium Aluminum Titanium Phosphate material are further reduced, thereby further improving the ionic conductivity of the modified Lithium Aluminum Titanium Phosphate.

In a preferred embodiment, a ratio of the amounts of substances in the Lithium Aluminum Titanium Phosphate matrix and the coating layer is 1:(0.001-0.02). Compared to other particle size ranges, by limiting the ratio of the amounts of the substances in the Lithium Aluminum Titanium Phosphate matrix and the coating layer within the above range, the capacity retention rate and thermal stability of the modified Lithium Aluminum Titanium Phosphate are further improved.

Second aspect of the present disclosure provides a method for preparing the above modified Lithium Aluminum Titanium Phosphate. The preparation method includes: a Lithium Aluminum Titanium Phosphate matrix is prepared; and physical coating is performed on the Lithium Aluminum Titanium Phosphate matrix and ZrₓSi₁₋ₓO₂/TiO₂, so as to obtain the modified Lithium Aluminum Titanium Phosphate.

The above preparation method is simple in process, low in cost, and easy to achieve industrialization promotion. Furthermore, the modified Lithium Aluminum Titanium Phosphate prepared by the above method has a good capacity retention rate and high ionic conductivity.

The Lithium Aluminum Titanium Phosphate matrix may be prepared by using a preparation method commonly used in the art. Preferably, the process of preparing the Lithium Aluminum Titanium Phosphate matrix includes: dry mixing, sintering, and first grinding are sequentially performed on a mixture of a lithium source compound, an aluminum source compound, a titanium source compound, and a phosphorus source compound, so as to obtain the Lithium Aluminum Titanium Phosphate matrix.

In a preferred embodiment, a molar ratio of Li in the lithium source compound, Al in the aluminum source compound, Ti in the titanium source compound, and P in the phosphorus source compound is (1.3-1.35):0.3:1.7:3. The molar ratio of the Li in the lithium source compound, the Al in the aluminum source compound, the Ti in the titanium source compound, and the P in the phosphorus source compound includes, but is not limited to, the above range, and by limiting the molar ratio within the above range, the modified Lithium Aluminum Titanium Phosphate is further improved.

In order to improving the mixing uniformity of reaction raw materials, thereby increasing a conversion rate, preferably, dry mixing includes: the mixture of the lithium source compound, the aluminum source compound, the titanium source compound, and the phosphorus source compound is mixed for 3-5 min at a rotary speed of 200-400 rpm, and then is mixed for 3-5 min at the rotary speed of 700-900 rpm.

The Lithium Aluminum Titanium Phosphate matrix is formed through the sintering process. Preferably, the sintering process is performed under an air atmosphere, a sintering temperature is 800-950 °C, and a constant temperature time is 6-15 h. The first grinding includes: deionized water is used as a solvent to perform ultrafine grinding on a sintered product until the particle size D50 is 0.5-0.6 µm.

In a preferred embodiment, the above physical coating includes: second grinding, spray drying, and crushing are sequentially performed on a mixture of the Lithium Aluminum Titanium Phosphate matrix and the ZrₓSi₁₋ₓO₂/TiO₂, so as to obtain the modified Lithium Aluminum Titanium Phosphate. Performing spray drying after second grinding facilitates improvement of the efficiency and effect of spray drying.

In a preferred embodiment, after second grinding, the D50 of the mixture of the Lithium Aluminum Titanium Phosphate matrix and the ZrₓSi₁₋ₓO₂/TiO₂ is 0.2-0.3 µm. By limiting the D50 of the mixture of the Lithium Aluminum Titanium Phosphate matrix and the ZrₓSi₁₋ₓO₂/TiO₂ within the above range, the ionic conductivity and capacity retention rate of the modified Lithium Aluminum Titanium Phosphate subsequentially prepared can be further improved. The D50 of the mixture of the Lithium Aluminum Titanium Phosphate matrix and the ZrₓSi₁₋ₓO₂/TiO₂ is preferably 0.2 µm, 0.24 µm, 0.25 µm, 0.28 µm, 0.3 µm, or a range formed by any two of the above values.

In a preferred embodiment, conditions for the spray drying comprise an inlet air temperature being 220-250 °C and an outlet air temperature being 90-110 °C. The inlet air temperature and outlet air temperature of the spray drying process include, but are not limited to, the above range, and by limiting the inlet air temperature and the outlet air temperature within the above range, a drying effect is further improved.

Preferably, the crushing is airflow pulverization. The airflow pulverization process is performed in a closed apparatus, such that dust pollution may be reduced, and environmental protection may be improved. Meanwhile, compared to a mechanical pulverization process, a product obtained after airflow pulverization is more uniform in particle size, smoother in surface, regular in shape, and good in dispersion. Preferably, after airflow pulverization, a particle size D50 of particles is 0.9-1.5 µm, and Dmax is less than 10 µm.

Third aspect of the present disclosure further provides a lithium-ion solid-state battery, including a solid-state electrolyte. The solid-state electrolyte is the modified Lithium Aluminum Titanium Phosphate provided in the present disclosure or is prepared by the above preparation method.

The modified LATP material prepared in the present disclosure simultaneously has the advantages of being high in ionic conductivity and capacity retention rate, good in thermal stability, etc. By using the modified Lithium Aluminum Titanium Phosphate as the solid-state electrolyte to prepare the lithium-ion solid-state battery, the electrochemical comprehensive performance during application can be greatly improved.

The present disclosure is further described in detail below with reference to specific embodiments, and the embodiments cannot be construed as limiting the scope of protection claimed in the present disclosure.

### Embodiment 1

Modified Lithium Aluminum Titanium Phosphate and a preparation method thereof, including the following steps.

At S1, preparation of a Lithium Aluminum Titanium Phosphate LATP material: lithium carbonate, aluminum oxide, titanium dioxide, and ammonium dihydrogen phosphate were weighed according to an elemental molar ratio of Li:Al:Ti:P being 1.3:0.3:1.7:3, and subjected to dry mixing and sintering sequentially, so as to obtain a pure LATP matrix material, where the dry mixing process included: mixing was performed for 3 min at a rotary speed of 200 rpm, and then mixing was performed for 3 min at the rotary speed of 700 rpm; and the sintering process included: sintering was performed for 6 h at a constant temperature of 800 °C under an air atmosphere.

At S2, the LATP matrix material prepared in S1 was finely ground by using water as a solvent until a particle size D50 was 0.5 µm, then was mixed with a Zr_{0.1}Si_{0.9}O₂/TiO₂ material for coating, where a molar ratio of Zr_{0.1}Si_{0.9}O₂/TiO₂ to Li_{1.3}Al_{0.3}Ti_{1.7}(PO₄)₃ was 0.001:1; after the coating process ended, the material was ground until the particle size D50 was 0.2 µm; spray drying was performed under conditions of an inlet air temperature being 220 °C and an outlet air temperature being 90 °C; and finally, the material after spray drying was subjected to airflow pulverization until the particle size D50 was 0.9 µm, and Dmax was 5 µm, so as to obtain a modified Lithium Aluminum Titanium Phosphate LATP material coated by the Zr_{0.1}Si_{0.9}O₂/TiO₂.

It was to be noted that, in this embodiment and subsequent embodiments, a solid-state electrolyte was required to be prepared into a circular sample to be tested; alternating current impedance at different response frequencies was recorded by using an electrochemical workstation; different electrode processes in which there was a difference in a reaction time constant were analyzed; and the ionic conductivity of the material was obtained through fitting, analysis, and calculation. The above modified LATP material was coated on a surface of ternary LiNi_{0.8}Co_{0.1}Mn_{0.1}O₂ (NCM811) by using the same process, a coating amount was 0.05%, and the NCM811 coating the LATP was used as a cathode material; an analog battery was assembled by using a battery-grade lithium sheet as an anode material and using an electrolyte solution with a principal component being lithium hexafluorophosphate; a charging and discharging electrochemical window was at 3.0-4.3 V; a specific capacity at 1 C and a high-temperature cycle retention rate at 55 °C/1C were tested; and a differential scanning calorimetry peak temperature delithiated cathode was obtained through testing under compressed air at 10 °C/min from room temperature to 400 °C.

### Embodiment 2

Modified Lithium Aluminum Titanium Phosphate and a preparation method thereof, including the following steps.

At S1, preparation of a Lithium Aluminum Titanium Phosphate LATP material: lithium hydroxide, aluminum hydroxide, titanium dioxide, and ammonium phosphate dibasic were weighed according to an elemental molar ratio of Li:Al:Ti:P being 1.32:0.3:1.7:3, and subjected to dry mixing and sintering sequentially, so as to obtain a pure LATP matrix material, where the dry mixing process included: mixing was performed for 3 min at a rotary speed of 250 rpm, and then mixing was performed for 3.5 min at the rotary speed of 750 rpm; and the sintering process included: sintering was performed for 8 h at a constant temperature of 800 °C under an air atmosphere.

At S2, the LATP matrix material prepared in S1 was finely ground by using water as a solvent until a particle size D50 was 0.52 µm, then was mixed with a Zr_{0.4}Si_{0.6}O₂/TiO₂ material for coating, where a molar ratio of Zr_{0.4}Si_{0.6}O₂/TiO₂ to Li_{1.3}Al_{0.3}Ti_{1.7}(PO₄)₃ was 0.005:1; after the coating process ended, the material was continuously ground until the particle size D50 was 0.24 µm; then spray drying was performed under conditions of an inlet air temperature being 230 °C and an outlet air temperature being 95 °C; and finally, the material after spray drying was subjected to airflow pulverization until the particle size D50 was 1.0 µm, and Dmax was 6 µm, so as to obtain a modified Lithium Aluminum Titanium Phosphate LATP material coated by the Zr_{0.4}Si_{0.6}O₂/TiO₂.

### Embodiment 3

Modified Lithium Aluminum Titanium Phosphate and a preparation method thereof, including the following steps.

At S1, preparation of a Lithium Aluminum Titanium Phosphate LATP material: lithium carbonate, aluminum hydroxide, titanium dioxide, and ammonium phosphate dibasic were weighed according to an elemental molar ratio of Li:Al:Ti:P being 1.325:0.3:1.7:3, and subjected to dry mixing and sintering sequentially, so as to obtain a pure LATP matrix material, where the dry mixing process included: mixing was performed for 4 min at a rotary speed of 300 rpm, and then mixing was performed for 4 min at the rotary speed of 800 rpm; and the sintering process included: sintering was performed for 1 h at a constant temperature of 900 °C under an air atmosphere.

At S2, the LATP matrix material prepared in S1 was finely ground by using water as a solvent until a particle size D50 was 0.55 µm, then was mixed with a Zr_{0.1}Si_{0.9}O₂/TiO₂ material for coating, where a molar ratio of Zr_{0.5}Si_{0.5}O₂/TiO₂ to Li_{1.3}Al_{0.3}Ti_{1.7}(PO₄)₃ was 0.01:1; after the coating process ended, the material was continuously ground until the particle size D50 was 0.25 µm; then spray drying was performed under conditions of an inlet air temperature being 235 °C and an outlet air temperature being 100 °C; and finally, the material after spray drying was subjected to airflow pulverization until the particle size D50 was 1.2 µm, and Dmax was 7 µm, so as to obtain a modified Lithium Aluminum Titanium Phosphate LATP material coated by the Zr_{0.5}Si_{0.5}O₂/TiO₂.

### Embodiment 4

Modified Lithium Aluminum Titanium Phosphate and a preparation method thereof, including the following steps.

At S1, preparation of a Lithium Aluminum Titanium Phosphate LATP material: lithium oxide, aluminum chloride, titanium dioxide, and ammonium phosphate dibasic were weighed according to an elemental molar ratio of Li:Al:Ti:P being 1.31:0.3:1.7:3, and subjected to dry mixing and sintering sequentially, so as to obtain a pure LATP matrix material, where the dry mixing process included: mixing was performed for 4.5 min at a rotary speed of 250 rpm, and then mixing was performed for 3 min at the rotary speed of 900 rpm; and the sintering process included: sintering was performed for 10 h at a constant temperature of 875 °C under an air atmosphere.

At S2, the LATP matrix material prepared in S1 was finely ground by using water as a solvent until a particle size D50 was 0.58 µm, then was mixed with a Zr_{0.1}Si_{0.9}O₂/TiO₂ material for coating, where a molar ratio of Zr_{0.7}Si_{0.3}O₂/TiO₂ to Li_{1.3}Al_{0.3}Ti_{1.7}(PO₄)₃ was 0.015:1; after the coating process ended, the material was continuously ground until the particle size D50 was 0.28 µm; then spray drying was performed under conditions of an inlet air temperature being 250 °C and an outlet air temperature being 95 °C; and finally, the material after spray drying was subjected to airflow pulverization until the particle size D50 was 1.4 µm, and Dmax was 8 µm, so as to obtain a modified Lithium Aluminum Titanium Phosphate LATP material coated by the Zr_{0.7}Si_{0.3}O₂/TiO₂.

### Embodiment 5

Modified Lithium Aluminum Titanium Phosphate and a preparation method thereof, including the following steps.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.8}Si_{0.2}O₂/TiO₂ material for coating, where a molar ratio of Zr_{0.8}Si_{0.2}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified Lithium Aluminum Titanium Phosphate LATP material coated by the Zr_{0.8}Si_{0.2}O₂/TiO₂.

### Embodiment 6

Modified Lithium Aluminum Titanium Phosphate LATP and a preparation method thereof, including the following steps.

At S1, preparation of a Lithium Aluminum Titanium Phosphate LATP material: lithium oxide, aluminum chloride, titanium oxide, and ammonium phosphate dibasic were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 5 min at a rotary speed of 400 rpm, and then mixing was performed for 5 min at the rotary speed of 900 rpm; and the sintering process included: sintering was performed for 15 h at a constant temperature of 950 °C under an air atmosphere.

At S2, the LATP matrix material prepared in S1 was finely ground by using water as a solvent until a particle size D50 was 0.6 µm, then was mixed with a Zr_{0.9}Si_{0.1}O₂/TiO₂ material for coating, where a molar ratio of Zr_{0.9}Si_{0.1}O₂/TiO₂ to Li_{1.3}Al_{0.3}Ti_{1.7}(PO₄)₃ was 0.02:1; after the coating process ended, the material was ground until the particle size D50 was 0.3 µm; spray drying was performed under conditions of an inlet air temperature being 250 °C and an outlet air temperature being 110 °C; and finally, the material after spray drying was subjected to airflow pulverization until the particle size D50 was 1.5 µm, and Dmax was 10 µm, so as to obtain a modified Lithium Aluminum Titanium Phosphate LATP material coated by the Zr_{0.9}Si_{0.1}O₂/TiO₂.

### Embodiment 7

A difference between this embodiment and Embodiment 5 lied in that, the coating layer was constituted by ZrₓSi₁₋ₓO₂/TiO₂, where x was 0.1. Details were as follows.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.9}Si_{0.1}O₂/TiO₂ material for coating, where a molar ratio of Zr_{0.9}Si_{0.1}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified Lithium Aluminum Titanium Phosphate LATP material coated by the Zr_{0.9}Si_{0.1}O₂/TiO₂.

### Embodiment 8

A difference between this embodiment and Embodiment 5 lied in that, the coating layer was constituted by ZrₓSi₁₋ₓO₂/TiO₂, where x was 0.3. Details were as follows.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.3}Si_{0.7}O₂/TiO₂ material for coating, where a molar ratio of Zr_{0.3}Si_{0.7}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified LATP material coated by the Zr_{0.3}Si_{0.7}O₂/TiO₂.

### Embodiment 9

A difference between this embodiment and Embodiment 5 lied in that, the coating layer was constituted by ZrₓSi₁₋ₓO₂/TiO₂, where x was 0.5. Details were as follows.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.5}Si_{0.5}O₂/TiO₂ material for coating, where a molar ratio of Zr_{0.5}Si_{0.5}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified Lithium Aluminum Titanium Phosphate LATP material coated by the Zr_{0.5}Si_{0.5}O₂/TiO₂.

### Embodiment 10

A difference between this embodiment and Embodiment 5 lied in that, the coating layer was constituted by ZrₓSi₁₋ₓO₂/TiO₂, where x was 0.6. Details were as follows.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.6}Si_{0.4}O₂/TiO₂ material for coating, where a molar ratio of Zr_{0.6}Si_{0.4}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified Lithium Aluminum Titanium Phosphate LATP material coated by the Zr_{0.6}Si_{0.4}O₂/TiO₂.

### Embodiment 11

A difference between this embodiment and Embodiment 5 lied in that, the coating layer was constituted by ZrₓSi₁₋ₓO₂/TiO₂, where x was 0.9. Details were as follows.

At S1, preparation of a Lithium Aluminum Titanium Phosphate LATP material: lithium oxide, aluminum oxide, titanium dioxide, and ammonium dihydrogen phosphate were weighed according to an elemental molar ratio of Li:Al:Ti:P being 1.35:0.3:1.7:3, and subjected to dry mixing and sintering sequentially, so as to obtain a pure LATP matrix material, where the dry mixing process included: mixing was performed for 4.5 min at a rotary speed of 350 rpm, and then mixing was performed for 3.5 min at the rotary speed of 750 rpm; and the sintering process included: sintering was performed for 7 h at a constant temperature of 900 °C under an air atmosphere.

At S2, the LATP matrix material prepared in S1 was finely ground by using water as a solvent until a particle size D50 was 0.56 µm, then was mixed with a Zr_{0.9}Si_{0.1}O₂/TiO₂ material for coating, where a molar ratio of Zr_{0.9}Si_{0.1}O₂/TiO₂ to Li_{1.3}Al_{0.3}Ti_{1.7}(PO₄)₃ was 0.02:1; after the coating process ended, the material was ground until the particle size D50 was 0.28 µm; spray drying was performed under conditions of an inlet air temperature being 240 °C and an outlet air temperature being 105 °C; and finally, the material after spray drying was subjected to airflow pulverization until the particle size D50 was 1.4 µm, and Dmax was 9 µm, so as to obtain a modified Lithium Aluminum Titanium Phosphate LATP material coated by the Zr_{0.9}Si_{0.1}O₂/TiO₂.

### Embodiment 12

A difference between this embodiment and Embodiment 5 lied in that, the particle size of the Lithium Aluminum Titanium Phosphate matrix after first grinding was 0.5 µm, the particle size of the mixture of the Lithium Aluminum Titanium Phosphate matrix and the ZrₓSi₁₋ₓO₂/TiO₂ after second grinding was 0.2 µm, and the D50 after airflow pulverization was 1.2 µm, and Dmax was 7 µm.

### Embodiment 13

A difference between this embodiment and Embodiment 5 lied in that, the particle size of the Lithium Aluminum Titanium Phosphate matrix after first grinding was 0.6 µm, the particle size of the mixture of the Lithium Aluminum Titanium Phosphate matrix and the ZrₓSi₁₋ₓO₂/TiO₂ after second grinding was 0.3 µm, and the D50 after airflow pulverization was 1.2 µm, and Dmax was 7 µm.

### Embodiment 14

A difference between this embodiment and Embodiment 5 lied in that, the particle size of the Lithium Aluminum Titanium Phosphate matrix after first grinding was 0.3 µm, the particle size of the mixture of the Lithium Aluminum Titanium Phosphate matrix and the ZrₓSi₁₋ₓO₂/TiO₂ after second grinding was 0.5 µm, and the D50 after airflow pulverization was 1.2 µm, and Dmax was 7 µm.

### Embodiment 15

A difference between this embodiment and Embodiment 14 lied in that, the D50 after airflow pulverization was 2 µm, and Dmax was 12 µm.

### Comparative embodiment 1

A difference between this embodiment and Embodiment 3 only lied in that, Zr_{0.5}Si_{0.5}O₂/TiO₂ coating was not performed, and other preparation processes were the same. Details were as follows.

Modified Lithium Aluminum Titanium Phosphate LATP and a preparation method thereof, including the following steps.

At S1, preparation of an LATP material: lithium carbonate, aluminum hydroxide, titanium dioxide, and ammonium phosphate dibasic were weighed according to an elemental molar ratio of Li:Al:Ti:P being 1.325:0.3:1.7:3, and subjected to dry mixing and sintering sequentially, so as to obtain a pure LATP matrix material, where the dry mixing process included: mixing was performed for 4 min at a rotary speed of 300 rpm, and then mixing was performed for 4 min at the rotary speed of 800 rpm; and the sintering process included: sintering was performed for 1 h at a constant temperature of 900 °C under an air atmosphere.

At S2, the LATP matrix material prepared in S1 was finely ground by using water as a solvent until a particle size D50 was 0.55 µm, and continuously ground until the particle size D50 was 0.25 µm; then spray drying was performed under conditions of an inlet air temperature being 235 °C and an outlet air temperature being 100 °C; and finally, the material after spray drying was subjected to airflow pulverization until the particle size D50 was 1.2 µm, and Dmax was 7 µm, so as to obtain a modified Lithium Aluminum Titanium Phosphate LATP material coated by the Zr_{0.5}Si_{0.5}O₂/TiO₂.

### Comparative embodiment 2

A difference between this embodiment and Embodiment 3 only lied in that, the molar ratio of the Zr_{0.5}Si_{0.5}O₂/TiO₂ to the Li_{1.3}Al_{0.3}Ti_{1.7}(PO₄)₃ was 0.025:1, and other preparation processes were the same. Details were as follows.

At S1, preparation of a Lithium Aluminum Titanium Phosphate LATP material: lithium carbonate, aluminum hydroxide, titanium dioxide, and ammonium phosphate dibasic were weighed according to an elemental molar ratio of Li:Al:Ti:P being 1.325:0.3:1.7:3, and subjected to dry mixing and sintering sequentially, so as to obtain a pure LATP matrix material, where the dry mixing process included: mixing was performed for 4 min at a rotary speed of 300 rpm, and then mixing was performed for 4 min at the rotary speed of 800 rpm; and the sintering process included: sintering was performed for 1 h at a constant temperature of 900 °C under an air atmosphere.

At S2, the LATP matrix material prepared in S1 was finely ground by using water as a solvent until a particle size D50 was 0.55 µm, then was mixed with a Zr_{0.5}Si_{0.5}O₂/TiO₂ material for coating, where a molar ratio of Zr_{0.5}Si_{0.5}O₂/TiO₂ to Li_{1.3}Al_{0.3}Ti_{1.7}(PO₄)₃ was 0.025:1; after the coating process ended, the material was continuously ground until the particle size D50 was 0.25 µm; then spray drying was performed under conditions of an inlet air temperature being 235 °C and an outlet air temperature being 100 °C; and finally, the material after spray drying was subjected to airflow pulverization until the particle size D50 was 1.2 µm, and Dmax was 7 µm, so as to obtain a modified Lithium Aluminum Titanium Phosphate LATP material coated by the Zr_{0.5}Si_{0.5}O₂/TiO₂.

### Comparative embodiment 3

A difference between this embodiment and Embodiment 3 only lied in that, the molar ratio of the Zr_{0.5}Si_{0.5}O₂/TiO₂ to the Li_{1.3}Al_{0.3}Ti_{1.7}(PO₄)₃ was 0.0005:1, and other preparation processes were the same. Details were as follows.

At S1, preparation of a Lithium Aluminum Titanium Phosphate LATP material: lithium carbonate, aluminum hydroxide, titanium dioxide, and ammonium phosphate dibasic were weighed according to an elemental molar ratio of Li:Al:Ti:P being 1.325:0.3:1.7:3, and subjected to dry mixing and sintering sequentially, so as to obtain a pure LATP matrix material, where the dry mixing process included: mixing was performed for 4 min at a rotary speed of 300 rpm, and then mixing was performed for 4 min at the rotary speed of 800 rpm; and the sintering process included: sintering was performed for 1 h at a constant temperature of 900 °C under an air atmosphere.

At S2, the LATP matrix material prepared in S1 was finely ground by using water as a solvent until a particle size D50 was 0.55 µm, then was mixed with a Zr_{0.5}Si_{0.5}O₂/TiO₂ material for coating, where a molar ratio of Zr_{0.5}Si_{0.5}O₂/TiO₂ to Li_{1.3}Al_{0.3}Ti_{1.7}(PO₄)₃ was 0.0005:1; after the coating process ended, the material was continuously ground until the particle size D50 was 0.25 µm; then spray drying was performed under conditions of an inlet air temperature being 235 °C and an outlet air temperature being 100 °C; and finally, the material after spray drying was subjected to airflow pulverization until the particle size D50 was 1.2 µm, and Dmax was 7 µm, so as to obtain a modified Lithium Aluminum Titanium Phosphate LATP material coated by the Zr_{0.5}Si_{0.5}O₂/TiO₂.

### Comparative embodiment 4

A difference between this embodiment and Embodiment 3 only lied in that, the Zr_{0.5}Si_{0.5}O₂/TiO₂ and the Li_{1.3}Al_{0.3}Ti_{1.7}(PO₄)₃ were added, then grinding was performed until the particle size D50 was 0.5 µm, and other preparation processes were the same. Details were as follows.

At S1, preparation of a Lithium Aluminum Titanium Phosphate LATP material: lithium carbonate, aluminum hydroxide, titanium dioxide, and ammonium phosphate dibasic were weighed according to an elemental molar ratio of Li:Al:Ti:P being 1.325:0.3:1.7:3, and subjected to dry mixing and sintering sequentially, so as to obtain a pure LATP matrix material, where the dry mixing process included: mixing was performed for 4 min at a rotary speed of 300 rpm, and then mixing was performed for 4 min at the rotary speed of 800 rpm; and the sintering process included: sintering was performed for 1 h at a constant temperature of 900 °C under an air atmosphere.

At S2, the LATP matrix material prepared in S1 was finely ground by using water as a solvent until a particle size D50 was 0.55 µm, then was mixed with a Zr_{0.1}Si_{0.9}O₂/TiO₂ material for coating, where a molar ratio of Zr_{0.5}Si_{0.5}O₂/TiO₂ to Li_{1.3}Al_{0.3}Ti_{1.7}(PO₄)₃ was 0.01:1; after the coating process ended, the material was continuously ground until the particle size D50 was 0.5 µm; then spray drying was performed under conditions of an inlet air temperature being 235 °C and an outlet air temperature being 100 °C; and finally, the material after spray drying was subjected to airflow pulverization until the particle size D50 was 1.2 µm, and Dmax was 7 µm, so as to obtain a modified Lithium Aluminum Titanium Phosphate LATP material coated by the Zr_{0.5}Si_{0.5}O₂/TiO₂.

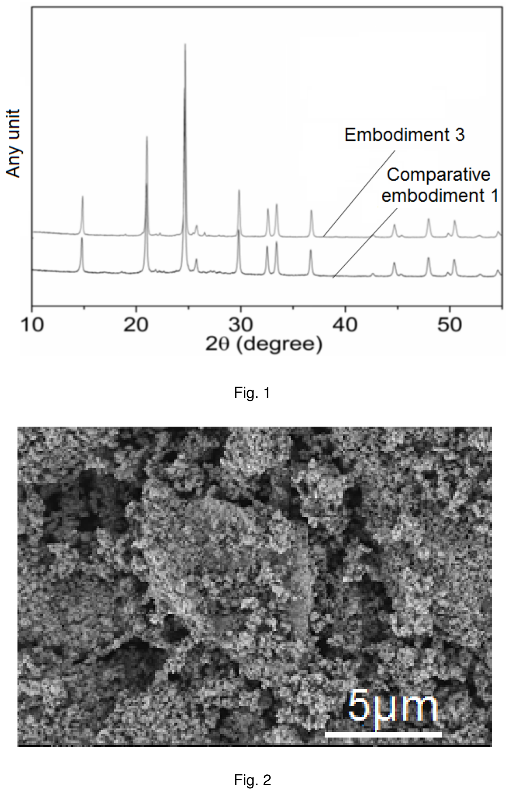

Fig. 1 was an XRD diagram of a modified LATP material prepared in Embodiment 3 and a modified LATP material prepared in Comparative embodiment 1 according to the present disclosure.

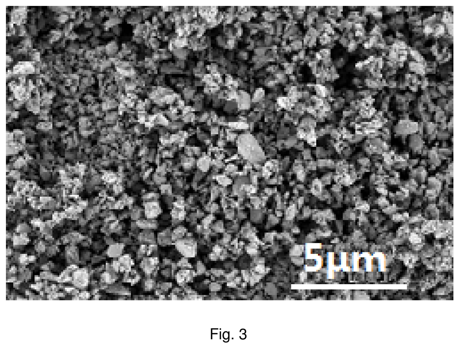

Fig. 2 was an SEM diagram of a modified LATP material prepared in Embodiment 3 according to the present disclosure. Fig. 3 was an SEM diagram of an LATP material prepared in Comparative embodiment 4 according to the present disclosure.

The ionic conductivity of the modified LATP prepared in Embodiment 3 was 3.72*10⁻⁴ S/cm, a differential scanning calorimetry peak temperature was 223.1 °C, the specific capacity of the LATP coated NCM811 material at 1 C was 206.5 mAh/g, and a high-temperature cycle capacity retention rate for 50 cycles was 99.46%, which was significantly superior to that of the unmodified material in Comparative embodiment 1. In Embodiments 2 and 3, the addition of either more or less Zr_{0.5}Si_{0.5}O₂/TiO₂ affected the performance of the LATP. The primary reason lied in insufficient coating, uneven coating, reduced material uniformity, and increased thickness due to excessive coating, resulting in degraded material properties. It indicated that, for the Zr_{0.5}Si_{0.5}O₂/TiO₂ coated LATP, only within the scope of coverage of this solution, overall performance such as density, ionic conductivity, differential scanning calorimetry peak temperature (thermal stability) could be improved. The coating of the LATP material improved the cycling performance, and reducing the reaction between Ti⁴⁺ and Ti³⁺ in ternary cathode coating might effectively increase the differential scanning calorimetry peak temperature, such that the capacity and thermal stability of a ternary material were improved.

**Table 1**

| | Ionic conductivity/S/cm | Differential scanning calorimetry peak temperature/°C | Capacity of LATP coated NCM at 1 C/mAh/g | Capacity retention rate for 50 cycles at 1 C/% |
|---|---|---|---|---|
| Embodiment 1 | 3.45*10⁻⁴ | 219.3 | 203.2 | 99.02 |
| Embodiment 2 | 3.61*10⁻⁴ | 218.4 | 204.4 | 99.24 |
| Embodiment 3 | 3.72*10⁻⁴ | 223.1 | 206.5 | 99.46 |
| Embodiment 4 | 3.41*10⁻⁴ | 221.8 | 204.9 | 99.44 |
| Embodiment 5 | 3.25*10⁻⁴ | 219.6 | 203.7 | 99.37 |
| Embodiment 6 | 3.41*10⁻⁴ | 220.5 | 203.1 | 99.19 |
| Embodiment 7 | 3.17*10⁻⁴ | 217.4 | 202.3 | 99.21 |
| Embodiment 8 | 3.10*10⁻⁴ | 219.3 | 202.9 | 99.34 |
| Embodiment 9 | 3.19*10⁻⁴ | 220.1 | 203.1 | 99.24 |
| Embodiment 10 | 3.06*10⁻⁴ | 223.2 | 203.4 | 99.53 |
| Embodiment 11 | 3.03*10⁻⁴ | 219.2 | 204.5 | 99.24 |
| Embodiment 12 | 3.12*10⁻⁴ | 219.9 | 206.1 | 99.56 |
| Embodiment 13 | 3.21*10⁻⁴ | 222.1 | 205.3 | 99.21 |
| Embodiment 14 | 2.76*10⁻⁴ | 219.4 | 201.3 | 99.34 |
| Embodiment 15 | 2.11*10⁻⁴ | 216.3 | 202.1 | 99.12 |
| Comparative embodiment 1 | 1.09*10⁻⁴ | 201.3 | 197.1 | 97.28 |
| Comparative embodiment 2 | 2.34*10⁻⁴ | 204.2 | 199.4 | 97.21 |
| Comparative embodiment 3 | 2.56*10⁻⁴ | 203.1 | 199.2 | 97.46 |
| Comparative embodiment 4 | 2.91*10⁻⁴ | 214.5 | 202.2 | 98.51 |

From the above description, it might be seen that, the above embodiments of the present disclosure achieved the following technical effects. The coating layer formed on a surface of the LATP material by the ZrₓSi₁₋ₓO₂/TiO₂ could effectively increase the ionic conductivity of the LATP material, and a differential scanning calorimetry peak temperature might be effectively increased by applying the coating layer in a ternary cathode material, thereby improving the capacity and thermal stability of a ternary material. By causing the particle size of the ZrₓSi₁₋ₓO₂/TiO₂ to be less than the particle size of the Li_{1.3}Al_{0.3}Ti_{1.7}(PO₄)₃, the ZrₓS₁₋ₓO₂/TiO₂ could be better coated on the surface of the LATP material, thereby reducing holes and gaps in the surface of the modified LATP material, and improving the ionic conductivity. Based on this, a modified LATP material having the above compositions simultaneously had the advantages of being high in ionic conductivity and capacity retention rate, good in thermal stability, etc.

It is to be noted that terms "first", "second" and the like in the description and claims of the present disclosure are used for distinguishing similar objects rather than describing a specific sequence or a precedence order. It should be understood that the terms used in such a way may be exchanged where appropriate, in order that the implementations of the present disclosure described here can be implemented in an order other than those described herein.

The above are only the preferred embodiments of the present disclosure and are not intended to limit the present disclosure. For those skilled in the art, the present disclosure may have various modifications and variations. Any modifications, equivalent replacements, improvements and the like made within the spirit and principle of the present disclosure shall fall within the scope of protection of the present disclosure.

## Claims

1. A modified Lithium Aluminum Titanium Phosphate, comprising a Lithium Aluminum Titanium Phosphate matrix and a coating layer, wherein the Lithium Aluminum Titanium Phosphate matrix is represented by Li_{1.3}Al_{0.3}Ti_{1.7}(PO₄)₃, and the coating layer is formed by ZrₓSi₁₋ₓO₂/TiO₂, wherein x is 0.1-0.9, and a particle size of the ZrₓSi₁₋ₓO₂/TiO₂ is less than a particle size of the Li_{1.3}Al_{0.3}Ti_{1.7}(PO₄)₃.

2. The modified Lithium Aluminum Titanium Phosphate according to claim 1, wherein a particle size D50 of the modified Lithium Aluminum Titanium Phosphate is 0.9-1.5 µm, and Dmax is less than 10 µm.

3. The modified Lithium Aluminum Titanium Phosphate according to claim 1, wherein a ratio of the amounts of substances in the Lithium Aluminum Titanium Phosphate matrix and the coating layer is 1:(0.001-0.02).

4. A method for preparing the modified Lithium Aluminum Titanium Phosphate according to claim 1, wherein the preparation method comprises:
preparing a Lithium Aluminum Titanium Phosphate matrix according to claim 1; and
performing physical coating on the Lithium Aluminum Titanium Phosphate matrix and ZrₓSi₁₋ₓO₂/TiO₂, so as to obtain the modified Lithium Aluminum Titanium Phosphate.

5. The method for preparing the modified Lithium Aluminum Titanium Phosphate according to claim 4, wherein preparing the Lithium Aluminum Titanium Phosphate matrix comprises: sequentially performing dry mixing, sintering, and first grinding on a mixture of a lithium source compound, an aluminum source compound, a titanium source compound, and a phosphorus source compound, so as to obtain the Lithium Aluminum Titanium Phosphate matrix, wherein
a molar ratio of Li in the lithium source compound, Al in the aluminum source compound, Ti in the titanium source compound, and P in the phosphorus source compound is (1.3-1.35):0.3:1.7:3.

6. The method for preparing the modified Lithium Aluminum Titanium Phosphate according to claim 5, wherein the dry mixing process comprises: mixing the mixture of the lithium source compound, the aluminum source compound, the titanium source compound, and the phosphorus source compound for 3-5 min at a rotary speed of 200-400 rpm, and then mixing the mixture for 3-5 min at the rotary speed of 700-900 rpm.

7. The method for preparing the modified Lithium Aluminum Titanium Phosphate according to claim 5, wherein the sintering process is performed under an air atmosphere, a sintering temperature is 800-950 °C, and a constant temperature time is 6-15 h.

8. The method for preparing the modified Lithium Aluminum Titanium Phosphate according to claim 5, wherein the first grinding comprises using deionized water as a solvent to perform ultrafine grinding on a sintered product until the particle size D50 is 0.5-0.6 µm.

9. The method for preparing the modified Lithium Aluminum Titanium Phosphate according to any one of claims 4 to 8, wherein the physical coating comprises: sequentially performing second grinding, spray drying, and crushing on a mixture of the Lithium Aluminum Titanium Phosphate matrix and the ZrₓSi₁₋ₓO₂/TiO₂, so as to obtain the modified Lithium Aluminum Titanium Phosphate, wherein
after the second grinding, a particle size D50 of the mixture is 0.2-0.3 µm;
conditions for the spray drying comprise an inlet air temperature being 220-250 °C and an outlet air temperature being 90-110 °C; and
the crushing is airflow pulverization, after crushing, a particle size D50 of particles is 0.9-1.5 µm, and Dmax is less than 10 µm.

10. A lithium-ion solid-state battery, comprising a solid-state electrolyte, wherein the solid-state electrolyte is the modified Lithium Aluminum Titanium Phosphate according to any one of claims 1 to 3 or is prepared by the preparation method according to any one of claims 4 to 9.
